# EUROPEAN PATENT SPECIFICATION

(11) **EP 3 537 297 B1**
(45) Date of publication and mention of the grant of the patent: **10.12.2025**
(21) Application number: 17885221.6
(22) Date of filing: 15.12.2017
(51) Int. Cl.: G06F 21/62, H04L 67/55, G06F 9/50, G06Q 20/06, G06F 21/00, G06Q 20/08

(54) **RESOURCE PROCESSING METHOD AND APPARATUS**
RESSOURCENVERARBEITUNGSVERFAHREN UND -VORRICHTUNG
PROCÉDÉ ET APPAREIL DE TRAITEMENT DE RESSOURCES

(30) Priority: 23.12.2016 CN 201611207781
(43) Date of publication of application: 11.09.2019
(73) Proprietor: Advanced New Technologies Co., Ltd., George Town, Grand Cayman KY1-9008 (KY)
(72) Inventor: YANG, Zhirong, Hangzhou Zhejiang 311121 (CN); DAI, Xin, Hangzhou Zhejiang 311121 (CN); MA, Hai, Hangzhou Zhejiang 311121 (CN); MEI, Fangcheng, Hangzhou Zhejiang 311121 (CN); LIU, Mei, Hangzhou Zhejiang 311121 (CN); WAN, Qian, Hangzhou Zhejiang 311121 (CN); LIU, Qiaoyong, Hangzhou Zhejiang 311121 (CN); DONG, Hualiang, Hangzhou Zhejiang 311121 (CN); WANG, Zhixu, Hangzhou Zhejiang 311121 (CN); DING, Weiwei, Hangzhou Zhejiang 311121 (CN)
(74) Representative: Marks & Clerk LLP
(86) International application number: PCT/CN2017/116529
(87) International publication number: WO 2018/113603

(56) References cited:
- EP-A1- 0 715 247
- WO-A1-2016/007696
- CA-A1- 2 838 406
- CN-A- 103 123 706
- CN-A- 104 753 907
- CN-A- 105 608 569
- CN-A- 105 719 131
- CN-A- 107 038 073
- US-A1- 2016 092 474
- SYMANTEC CORPORATION: "E-security begins with sound security policies", ANNOUNCEMENT SYMANTEC, XX, XX, 14 June 2001 (2001-06-14), XP002265695

## Description

### TECHNICAL FIELD

This application relates to the technical field of mobile communication, in particular to a resource processing method and apparatus thereof.

### BACKGROUND

In the existing technologies, when there is a resource demand, a resource demander can make a resource acquisition request and record the progress of resource acquisition through a resource allocation chart. When receiving the resource acquisition request, a resource supplier can allocate a resource to the resource demander. When the resource supplier supplies the resource to the resource demander and if the resource supplier has no resource available at the moment, resource allocation is suspended. The resource allocation chart remains pending.

In the process of implementing the existing technologies, the inventor found the following technical problems:
when the resource supplier has no resource available at the moment, resource allocation is suspended, and the resource allocation chart is pending, which reduces the efficiency of resource turnover. Meanwhile, when the resource allocation chart is pending for a long time, the occupancy time on computer storage and computing resources is long.

Therefore, it is necessary to provide a technical solution for resource processing to solve the technical problems of low resource turnover efficiency, and high occupancy of computer storage and computing resources during resource allocation. Patent publications CA2838406 A1 and US2016/092474 A1 constitute pertinent background art.

### SUMMARY

The invention is defined by independent claims 1, 11 and 12. Further embodiments are defined by the dependent claims.

Embodiments of this application provide a technical solution for solving the technical problems of low resource turnover efficiency, and high occupancy of computer storage and computing resources during resource allocation.

Specifically, a resource processing method is achieved by a computer configured to execute the following steps:
generating a resource allocation chart based on a resource allocation request;
processing the resource allocation chart and generating an access entrance of the resource allocation chart; and
opening the access entrance, so that a third party resource supplier can respond to the resource allocation request via the access entrance.

The embodiments of this application further provide a resource processing apparatus, including:
a requesting module, configured to generate a resource allocation chart based on a resource allocation request;
a processing module, configured to process the resource allocation chart and generate an access entrance of the resource allocation chart; and
a posting module, configured to open the access entrance, so that a third party resource supplier can respond to the resource allocation request via the access entrance.

The resource processing method and apparatus provided by the embodiments of this application at least have the following benefits.

The resource allocation chart based on the resource allocation request is processed to generate the access entrance. When there is a shortage in local resources or it is not suitable to allocate resources, the third party resource supplier can respond to the resource allocation request via the access entrance and perform an resource allocating operation, thereby improving the turnover efficiency of resources. In addition, the corresponding resource allocation chart is processed promptly, so that the occupancy on computer storage and computing resources is reduced.

### BRIEF DESCRIPTION OF THE DRAWINGS

The accompanying drawings set forth herein are used for providing a further understanding of this application and constitute a part of this application. Exemplary embodiments of this application and the description thereof are used for explaining this application, and does not constitute any limitation on this application. In the accompanying drawings:
FIG. 1 is a flow chart of a resource processing method provided by an embodiment of this application.
FIG. 2 is a flow chart of a process for pushing information provided by an embodiment of this application.
FIG. 3 is a flow chart of another process for pushing information provided by an embodiment of this application.
FIG. 4 is a block diagram of a resource processing apparatus provided by an embodiment of this application.

### DETAILED DESCRIPTION

To clearly states the objectives, technical solutions, and advantages of this application, the technical solutions of this application will be clearly and completely described below with reference to specific embodiments of this application and the accompanying drawings. Apparently, the described embodiments are only some of the embodiments rather than all the embodiments of this application. All other embodiments obtained by a person of ordinary skill in the art based on the embodiments of this application shall fall within the protection scope of this application.

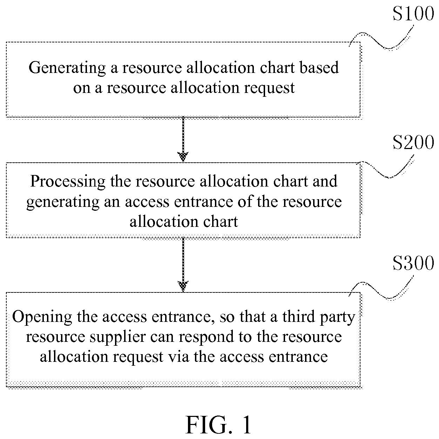

Referring to FIG. 1, which shows a resource processing method provided by an embodiment of this application, the method is achieved by a computer configured to execute the following steps:
S100: generating a resource allocation chart based on a resource allocation request.

The resource herein may include manufacturer supplies or consumer products, or the allocation rights thereof which can be allocated and consumed, or rights to control the manufacturer supplies or consumer products. For easy understanding, allocation of funds is taken as an example here. It should be pointed out that the substantive protection scope of this application should not be limited to the allocation of funds. Correspondingly, the resource allocation chart herein may include a bill. The generation of the resource allocation chart herein may be understood as a local computing device generating a resource allocation chart, or as receiving a resource allocation chart generated by an external application server. Specifically, for example, receiving a payment document based on a payment request generated by a server.

S200: processing the resource allocation chart and generating an access entrance of the resource allocation chart.

It can be understood that the information in a resource allocation chart in the existing technologies may be static. The resource allocation chart usually has various detailed information of a resource allocation requester. Here, processing the resource allocation chart is to disclose a portion of the information to other users, to keep the information of the resource allocation requester confidential and based on the need that the resource allocation chart can be accessed by other users.

Further, in another embodiment provided by this application, the steps of processing the resource allocation chart and generating the access entrance of the resource allocation chart specifically include:
encoding the resource allocation chart to generate a shared code.

Based on the requirement that the resource allocation chart can be accessed by other users, a virtual address of the resource allocation chart in the server is encoded and converted into a shared code which can be accessed by other users. Specifically, for example, the virtual address of the resource allocation chart in the server can be encoded as a password, or the virtual address of the resource allocation chart in the server can be encoded as a two-dimensional code.

S300: opening the access entrance, so that a third party resource supplier can respond to the resource allocation request via the access entrance.

The resource allocation requester can open the resource allocation chart to the third party resource supplier through sharing. The third party resource supplier can respond to the resource allocation request through the access entrance. Specifically, for example, the resource allocation requester can forward the shared code to the third party resource supplier, or the resource allocation requester can post the shared code on a platform. The third party resource supplier can access the resource allocation chart through a forwarded link, or the third party resource supplier can access the resource allocation chart through the shared code posted on the platform, and respond to the resource allocation request according to an instruction of the third party resource supplier.

Further, in another embodiment provided by this application, the steps of opening the access entrance specifically include:
setting an access condition; and
when the access condition is satisfied, opening the access entrance.

Based on the control of the number of accesses to the resource allocation chart and the security concern of the resource allocation chart, the access condition of the access entrance can be set. When an access behavior meets the access condition, the access entrance is open, and when an access behavior does not meet the access condition, the access entrance is closed.

Further, in another embodiment provided by this application, the steps of setting the access condition specifically include:
determining an upper limit of a number of the third party resource suppliers that the access entrance can accept; and
setting the access condition as that a number of accesses does not exceed the determined upper limit of the number.

The upper limit of the number of the third party resource suppliers that the access entrance can accept can be set. In the same day or within a period of time, when the number of accesses to the resource allocation chart by the third party resource suppliers through the access entrance reaches the upper limit, the access entrance is closed. When the number of accesses does not reach the upper limit, the access entrance is open. The upper limit herein can be set according to actual needs. Specifically, it can be a restriction on the number of accesses of a single third party resource supplier through the access entrance, a restriction on the total number of accesses of all the third party resource suppliers through the access entrance, or a restriction on the number of the third party resource suppliers.

Further, in another embodiment provided by this application, the steps of setting the access condition specifically include:
determining an opening period of the access entrance; and
setting the access condition as that an access time is within the determined opening period.

The access time of the access entrance can be set so that overdue access can be prevented, thus ensuring the security of sharing the resource allocation chart. When the third party resource supplier accesses the resource allocation chart within the determined opening period, the access entrance is open. When the third party resource supplier accesses the resource allocation chart beyond the opening period, the access entrance is closed.

In the embodiments provided by this application, the resource allocation chart based on the resource allocation request is processed to generate the access entrance. When there is a shortage in local resources or it is not suitable to allocate resources, the third party resource supplier can respond to the resource allocation request via the access entrance and perform an resource allocating operation, thereby improving the turnover efficiency of resources. In addition, the corresponding resource allocation chart is processed promptly, so that the occupancy on computer storage and computing resources is reduced.

Further, in another embodiment provided by this application, the method further includes:
encrypting the resource allocation chart to generate an encrypted resource allocation chart.

To keep information of the resource allocation requester confidential, the server can encrypt the resource allocation chart. Specifically, for example, the private information about the resource allocation requester, such that account information involved in the resource allocation chart is encrypted. When other users access the resource allocation chart through the shared code, the users can only see the information agreed to be disclosed in accordance with an agreement between the resource allocation requester and the server.

Further, in another embodiment provided by this application, the steps of generating the encrypted resource allocation chart specifically include:
generating a chart number of the encrypted resource allocation chart.

To keep the information of the resource allocation requester confidential, the server can encrypt the original resource allocation chart and generate the chart number of the encrypted resource allocation chart. Thus, through a mapping relationship between a chart number of the original resource allocation chart and the generated chart number of the encrypted resource allocation chart, other users can access the resource allocation chart through the shared code to see the information agreed to be disclosed in accordance with the agreement between the resource allocation requester and the server, but cannot reversely derivate a resource allocation record of the resource allocation requester through the generated chart number of the encrypted resource allocation chart via reverse engineering.

Further, in another embodiment provided by this application, the steps of opening the access entrance further include:
granting the permission for the third party resource supplier to access to the access entrance; and
blocking the permission for the third party resource supplier to open the access entrance.

To keep the information of the resource allocation requester confidential and secure so as to prevent the unlimited spread of the resource allocation chart, in the embodiments provided by this application, the permission for the third party resource supplier to access to the access entrance is granted, but the permission for the third party resource supplier to open the access entrance is blocked. In other words, the access entrance can only be spread at a first-level from a local user to the third party resource supplier, while the third party resource supplier is prevented from spreading to other parties at a second-level by forwarding or sharing.

According to the invention, the method further includes:
determining a processing state of the resource allocation chart when the third party resource supplier passes through the access entrance; and
providing a mode for responding to the resource allocation request according to the processing state of the resource allocation chart, so that the third party resource supplier responds to the resource allocation request according to the mode.

In this application, a mode for the third party resource supplier to respond to resource allocation can be provided according to the processing state of the resource allocation chart. When there is a shortage in local resources, resources can be supplied by the third party resource supplier. However, when the local resources are sufficient, after the local resources are allocated, the local resources can be compensated by the third party resource supplier, so that the local resources are always in a full state so as to locally respond to the resource allocation request as much as possible, thereby improving the turnover efficiency of resources and reducing the occupancy on computer storage and computing resources during processing of the resource allocation chart.

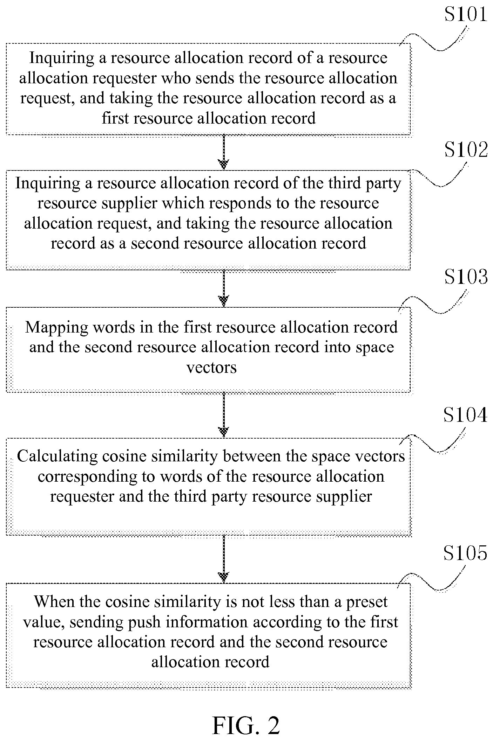

Referring to FIG. 2, according to the invention, the method further includes:
S101: inquiring a resource allocation record of a resource allocation requester who sends the resource allocation request, and taking the resource allocation record as a first resource allocation record;
S102: inquiring a resource allocation record of the third party resource supplier which responds to the resource allocation request, and taking the resource allocation record as a second resource allocation record;
S103: mapping words in the first resource allocation record and the second resource allocation record into space vectors;
S104: calculating cosine similarity between the space vectors corresponding to words of the resource allocation requester and the third party resource supplier; and
S105: when the cosine similarity is not less than a preset value, sending push information according to the first resource allocation record and the second resource allocation record.

In the embodiments provided by this application, a technical solution for data mining and application is further provided. A server can inquire the resource allocation record of the resource allocation requester who sends the resource allocation request, and take the resource allocation record as the first resource allocation record. Still taking the resource allocation request as a payment request and the resource allocation chart as a payment document, the payment document usually involves transaction details, such as commodity code, price, and date. The server takes a payment record within a period of time as the first resource allocation record. Similarly, the server takes a payment record of the third party resource supplier within a period of time as the second resource allocation record. Then the server can perform text processing on the first resource allocation record and the second resource allocation record, and map the words in the first resource allocation record and the second resource allocation record into the space vectors. Specifically, the words can be characterized as real value vectors using a word embedding model Word2Vec. The word embedding model Word2Vec has been disclosed by many documents in the existing technologies, and will not be described in detail here. Through large-scale semantic training, the processing of text content is simplified to vector operations in a multi-dimensional vector space. Further, the similarity between the resource allocation requester and the third party resource supplier can be characterized by calculating the similarity between the space vectors corresponding to the words of the resource allocation requester and the third party resource supplier. In this application, the cosine similarity of a space vector corresponding to the resource allocation requester and a space vector corresponding to the third party resource supplier can be calculated. When the calculated cosine similarity is not less than the preset value, it indicates that a behavior of the resource allocation requester and a behavior of the third party resource supplier are similar. Then, the push information is sent out according to the first resource allocation record and the second resource allocation record. The server can compare the first resource allocation record and the second resource allocation record, and in this example, can compare the commodities involved in the payment document, and push to the third party resource supplier commodity information existing in the payment document of the resource allocation requester but not existing in the payment document of the third party resource supplier. Similarly, the server can push to the resource allocation requester commodity information existing in the payment document of the third party resource supplier but not existing in the payment document of the resource allocation requester.

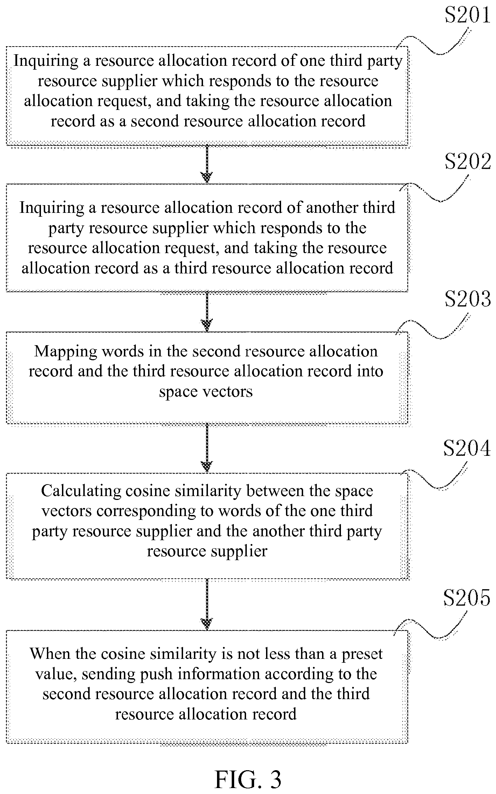

Referring to FIG. 3, further, in another embodiment provided by this application, the method further includes:
S201: inquiring a resource allocation record of one third party resource supplier which responds to the resource allocation request, and taking the resource allocation record as a second resource allocation record;
S202: inquiring a resource allocation record of another third party resource supplier which responds to the resource allocation request, and taking the resource allocation record as a third resource allocation record;
S203: mapping words in the second resource allocation record and the third resource allocation record into space vectors;
S204: calculating cosine similarity between the space vectors corresponding to words of the one third party resource supplier and the another third party resource supplier; and
S205: when the cosine similarity is not less than a preset value, sending push information according to the second resource allocation record and the third resource allocation record.

The difference from the previous embodiment is that the cosine similarity between the space vectors corresponding to the two third party resource suppliers is calculated here. Details are as follows:
the server can inquire the resource allocation record of one third party resource supplier within a period of time, and take the resource allocation record as the second resource allocation record. The server can inquire the resource allocation record of another third party resource supplier within a period of time, and take the resource allocation record as the third resource allocation record. Still taking the resource allocation request as a payment request and the resource allocation chart as a payment document, the payment document usually involves transaction details, such as commodity code, price, and date. The server can use a word embedding model Word2Vec to characterize the words as real value vectors. Then the cosine similarity between the space vectors corresponding to the two third party resource suppliers can be calculated. When the calculated cosine similarity is not less than the preset value, it indicates that the behaviors of the two third party resource suppliers are similar. Then, the push information is sent out according to the second resource allocation record and the third resource allocation record. The server can compare the second resource allocation record and the third resource allocation record, and in this example, can compare the commodities involved in the payment documents, and push to the third party resource supplier commodity information not existing in the payment document of the third party resource supplier. In general, "another third party resource supplier" herein can be characterized as a top N friends of the resource allocation requester.

The following describes a specific application scenario of the embodiments of this application:
a local computing device, such as a personal computer terminal device or a mobile terminal device, generates a payment document based on a payment request according to a transaction record. Of course, it can also be that the local computing device receives a payment document sent by an application server based on a payment request. The local computing device can process the payment document and generate a shared code such as two-dimensional code or password to serve as an access entrance for the payment document. Of course, the behavior of processing the payment document here can also be performed by the application server. The local computing device can synchronize the information with the application server by interacting therewith. The local computing device can forward the access entrance to a third party resource supplier or post the access entrance to a platform, specifically, for example, forward to friends or post to moments in the platform. Friends who receive the forwarded link to the access entrance or friends who see the access entrance post to moments can respond to the payment request. When the payment document is in an unpaid status, funds can be raised responding to the payment request. When the payment document is in a paid status, funds can be released as a reward responding to the payment request. In this way, the technical problems of low fund turnover efficiency, and high occupancy on computer storage and computing resources during fund allocation can be solved. Further, the application server can inquire a payment record of a payment requester. The application server can inquire a payment record of a fund requester or fund provider. The application server can use a word embedding model Word2Vec to process the payment records of the payment requester, the fund requester, or the fund provider, and map the payment requester, the fund requester, or the fund provider into space vectors. The application server can calculate the cosine similarity between a space vector corresponding to the payment requester and a space vector corresponding to the fund requester or the fund provider. When the cosine similarity is not less than a preset value, the application server pushes missing commodity information to the payment requester. Alternatively, the application server can push missing commodity information to the fund requester or the fund provider. The application server can further calculate the cosine similarity between the space vectors corresponding to two respective fund requesters or fund providers. When the cosine similarity is not less than the preset value, the application server pushes missing commodity information to the fund requester or the fund provider. The missing commodity information here can be obtained by comparing the payment documents.

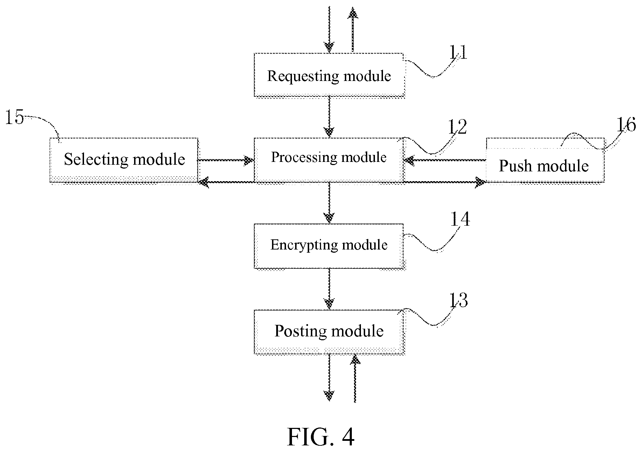

The above is the resource processing method provided by the embodiments of this application. Based on the same principle and referring to FIG. 4, this application further provides a resource processing apparatus, including:
a requesting module 11, configured to generate a resource allocation chart based on a resource allocation request;
a processing module 12, configured to process the resource allocation chart and generate an access entrance of the resource allocation chart; and
a posting module 13, configured to open the access entrance, so that a third party resource supplier can respond to the resource allocation request via the access entrance.

In this application, a mode for the third party resource supplier to respond to resource allocation can be provided according to a processing state of the resource allocation chart. When there is a shortage in local resources, resources can be supplied by the third party resource supplier. However, when the local resources are sufficient, after the local resources are allocated, the local resources can be compensated by the third party resource supplier, so that the local resources are always in a full state so as to locally respond to the resource allocation request as much as possible, thereby improving the turnover efficiency of resources and reducing the occupancy on computer storage and computing resources during processing of the resource allocation chart.

Further, in another embodiment provided by this application, the processing module 12 is specifically configured to:
encode the resource allocation chart to generate a shared code.

Based on the requirement that the resource allocation chart can be accessed by other users, a virtual address of the resource allocation chart in the server is encoded and converted into a shared code which can be accessed by other users. Specifically, for example, the virtual address of the resource allocation chart in the server can be encoded as a password, or the virtual address of the resource allocation chart in the server can be encoded as a two-dimensional code.

Further, in another embodiment provided by this application, the apparatus further includes an encrypting module 14, specifically configured to:
encrypt the resource allocation chart to generate an encrypted resource allocation chart.

To keep information of the resource allocation requester confidential, the server can encrypt the resource allocation chart. Specifically, for example, the private information about the resource allocation requester, such as account information involved in the resource allocation chart, is encrypted. When other users access the resource allocation chart through the shared code, the users can only see the information agreed to be disclosed in accordance with an agreement between the resource allocation requester and the server.

Further, in another embodiment provided by this application, the encrypting module 14 is further configured to:
generate a chart number of the encrypted resource allocation chart.

To keep the information of the resource allocation requester confidential, the server can encrypt the original resource allocation chart and generate the chart number of the encrypted resource allocation chart. Thus, through a mapping relationship between a chart number of the original resource allocation chart and the generated chart number of the encrypted resource allocation chart, other users can access the resource allocation chart through the shared code to see the information agreed to be disclosed in accordance with the agreement between the resource allocation requester and the server, but cannot reversely derivate a resource allocation record of the resource allocation requester through the generated chart number of the encrypted resource allocation chart via reverse engineering.

Further, in another embodiment provided by this application, the posting module 13 is configured to:
grant the permission for the third party resource supplier to access to the access entrance;
   and
block the permission for the third party resource supplier to open the access entrance.

To keep the information of the resource allocation requester confidential and secure so as to prevent the unlimited spread of the resource allocation chart, in the embodiments provided by this application, the permission for the third party resource supplier to access to the access entrance is granted, and the permission for the third party resource supplier to open the access entrance is withheld. In other words, the access entrance can only be spread at a first-level from a local user to the third party resource supplier, while the third party resource supplier is prevented from spreading to other parties at a second-level by forwarding or sharing.

Further, in another embodiment provided by this application, the posting module 13 is configured to:
set an access condition; and
when the access condition is satisfied, open the access entrance.

Based on the control of the number of accesses to the resource allocation chart and the security concern of the resource allocation chart, the access condition of the access entrance can be set. When an access behavior meets the access condition, the access entrance is open, and when an access behavior does not meet the access condition, the access entrance is closed.

Further, in another embodiment provided by this application, the posting module 13 is configured to:
determine a maximum number of times that the third party resource supplier is allowed to access the access entrance; and
set the access condition as that a number of accesses being not exceed the determined upper limit of the number.

The upper limit or the maximum number of the third party resource suppliers accessing the access entrance can be set. In the same day or within a period of time, when the number of accesses to the resource allocation chart by the third party resource suppliers through the access entrance reaches the upper limit, the access entrance is closed. And when the number of accesses does not reach the upper limit, the access entrance is open. The upper limit of the number herein can be set according to actual needs. Specifically, it can be a restriction on the number of accesses of a single third party resource supplier by the access entrance, a restriction on the total number of accesses of all the third party resource suppliers by the access entrance, or a restriction on the number of the third party resource suppliers.

Further, in another embodiment provided by this application, the posting module 13 is configured to:
determine an opening period of the access entrance; and
set the access condition as that an access time being within the determined opening period.

The access time of the access entrance can be set so that overdue access can be prevented, thus ensuring the security of sharing the resource allocation chart. When the third party resource supplier accesses the resource allocation chart within the determined opening period, the access entrance is open, and when the third party resource supplier accesses the resource allocation chart beyond the opening period, the access entrance is closed.

Further, in another embodiment provided by this application, the apparatus further includes a selecting module 15, specifically configured to:
determine a processing state of the resource allocation chart when the third party resource supplier passes through the access entrance; and
provide a mode for responding to the resource allocation request according to the processing state of the resource allocation chart, so that the third party resource supplier responds to the resource allocation request according to the mode.

In this application, a mode for the third party resource supplier to respond to resource allocation can be provided according to a processing state of the resource allocation chart. When there is a shortage in local resources, resources can be supplied by the third party resource supplier. However, when the local resources are sufficient, after the local resources are allocated, the local resources can be compensated by the third party resource supplier, so that the local resources are always in a full state so as to locally respond to the resource allocation request as much as possible, thereby improving the turnover efficiency of resources and reducing the occupancy on computer storage and computing resources during processing of the resource allocation chart.

Further, in another embodiment provided by this application, the apparatus further includes a push module 16, specifically configured to:
inquire a resource allocation record of a resource allocation requester who sends the resource allocation request, and take the resource allocation record as a first resource allocation record;
inquire a resource allocation record of the third party resource supplier which responds to the resource allocation request, and take the resource allocation record as a second resource allocation record;
map words in the first resource allocation record and the second resource allocation record into space vectors;
calculate cosine similarity between the space vectors corresponding to words of the resource allocation requester and the third party resource supplier; and
when the cosine similarity is not less than a preset value, send push information according to the first resource allocation record and the second resource allocation record.

In the embodiments provided by this application, a technical solution for data mining and application is further provided. The server can inquire the resource allocation record of the resource allocation requester who sends the resource allocation request, and take the resource allocation record as the first resource allocation record. Still taking the resource allocation request as a payment request and the resource allocation chart as a payment document, the payment document usually involves transaction details, such as commodity code, price, and date. The server takes a payment record within a period of time as the first resource allocation record. Similarly, the server takes a payment record of the third party resource supplier within a period of time as the second resource allocation record. Then the server can perform text processing on the first resource allocation record and the second resource allocation record, and map the words in the first resource allocation record and the second resource allocation record into the space vectors. Specifically, the words can be characterized as real value vectors using a word embedding model Word2Vec. The word embedding model Word2Vec has been disclosed by a large number of documents in the existing technologies, and will not be described in detail here. Through large-scale semantic training, the processing of text content is simplified to vector operation in multi-dimensional vector space. Further, the similarity between the resource allocation requester and the third party resource supplier can be characterized by calculating the similarity between the space vectors corresponding to the words of the resource allocation requester and the third party resource supplier. In this application, the cosine similarity between a space vector corresponding to the resource allocation requester and a space vector corresponding to the third party resource supplier can be calculated. When the calculated cosine similarity is not less than the preset value, it indicates that a behavior of the resource allocation requester and a behavior of the third party resource supplier are similar. Then, the push information is sent out according to the first resource allocation record and the second resource allocation record. The server can compare the first resource allocation record and the second resource allocation record, and in this example, can compare the commodities involved in the payment document, and push to the third party resource supplier commodity information existing in the payment document of the resource allocation requester but not existing in the payment document of the third party resource supplier. Similarly, the server can push to the resource allocation requester commodity information existing in the payment document of the third party resource supplier but not existing in the payment document of the resource allocation requester.

Further, in another embodiment provided by this application, the apparatus further includes a push module 16, specifically configured to:
inquire a resource allocation record of one third party resource supplier which responds to the resource allocation request, and take the resource allocation record as a second resource allocation record;
inquire a resource allocation record of another third party resource supplier which responds to the resource allocation request, and take the resource allocation record as a third resource allocation record;
map words in the second resource allocation record and the third resource allocation record into space vectors;
calculate cosine similarity between the space vectors corresponding to words of the one third party resource supplier and the another third party resource supplier; and
when the cosine similarity is not less than a preset value, send push information according to the second resource allocation record and the third resource allocation record.

The difference from the previous embodiment is that the cosine similarity between the space vectors corresponding to the two third party resource suppliers is calculated here. Details are as follows:
the server can inquire the resource allocation record of one third party resource supplier within a period of time, and take the resource allocation record as the second resource allocation record. The server can inquire the resource allocation record of another third party resource supplier within a period of time, and take the resource allocation record as the third resource allocation record. Still taking the resource allocation request as a payment request and the resource allocation chart as a payment document, the payment document usually involves transaction details, such as commodity code, price, and date. The server can use a word embedding model Word2Vec to characterize the words as real value vectors. Then the cosine similarity between the space vectors corresponding to the two third party resource suppliers can be calculated. When the calculated cosine similarity is not less than the preset value, it indicates that the behaviors of the two third party resource suppliers are similar. Then, the push information is sent out according to the second resource allocation record and the third resource allocation record. The server can compare the second resource allocation record and the third resource allocation record, and in this example, can compare the commodities involved in the payment documents, and push to the third party resource supplier commodity information not existing in the payment document of the third party resource supplier. In general, "another third party resource supplier" herein can be characterized as a top N friends of the resource allocation requester.

Further, in another embodiment provided by this application, the resource allocation chart includes a bill.

In the embodiments provided by this application, the resource allocation chart based on the resource allocation request is processed to generate the access entrance; when there is a shortage in local resources or it is not suitable to allocate resources, the third party resource supplier can respond to the resource allocation request via the access entrance and perform an resource allocating operation, thereby improving the turnover efficiency of resources. In addition, the corresponding resource allocation chart is processed promptly, so that the occupancy on computer storage and computing resources is reduced.

A person skilled in the art should understand that the embodiments of the present invention may be provided as a method, a system, or a computer program product. Therefore, the present invention may be include complete hardware embodiments, complete software embodiments, or embodiments combining software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used for implementing each process and/or each block in the flowcharts and/or the block diagrams and a combination of a process and/or a block in the flowcharts and/or the block diagrams. These computer program instructions may be provided for a general-purpose computer, a dedicated computer, a machine including an embedded processor, or a processor of any other programmable data processing device, so that the instructions executed by a computer or a processor of any other programmable data processing device can create an apparatus for implementing a specific function in one or more processes in the flowcharts and/or in one or more blocks in the block diagrams.

These computer program instructions may also be stored in a computer readable memory that can configure a computer or another programmable data processing device to work in a specific manner, so that the instructions stored in the computer readable memory generate a product including an instruction apparatus, wherein the instruction apparatus implements functions specified in one or more processes in the flowcharts and/or one or more blocks in the block diagrams.

These computer program instructions may also be loaded into a computer or another programmable data processing device, so that a series of operation steps are performed on the computer or another programmable data processing device to generate process implemented by a computer, and instructions executed on the computer or another programmable data processing device provide operation steps for implementing functions specified in one or more processes in the flowcharts and/or one or more blocks in the block diagrams.

In a typical configuration, the computing device includes one or more processors (CPUs), an input/output interface, a network interface, and a memory.

The memory may include, among computer readable media, a non-persistent memory such as a random access memory (RAM) and/or a non-volatile memory such as a read-only memory (ROM) or a flash memory (flash RAM). The memory is an example of the computer-readable medium.

The computer-readable medium includes persistent, non-persistent, movable, and unmovable media that may implement information storage by using any method or technology. Information may include a computer-readable instruction, a data structure, a program module, or other data. Examples of computer storage media include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette magnetic tape, tape and disk storage or other magnetic storage device or any other non-transmission media that may be configured to store information that a computing device can access. Based on the definition in the present disclosure, the computer-readable medium does not include transitory computer readable media (transitory media), such as a modulated data signal and a carrier.

It should also be noted that the terms "include", "comprise" and any other variants mean to cover the non-exclusive inclusion. Thereby, the process, method, article, or device which include a series of elements not only include those elements, but also include other elements which are not explicitly listed, or include the inherent elements of the process, method, article and device. Without further limitation, the element defined by a phrase "include one......" does not exclude other same elements in the process, method, article or device which include the element.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

The foregoing descriptions are merely embodiments of this application and are not intended to limit this application. For a person skilled in the art, various modifications and variations can be made to this application.

## Claims

1. A computer-executable resource processing method, comprising:
generating a resource allocation chart based on a resource allocation request, the resource allocation chart comprising information recording a progress of resource acquisition for the resource allocation request and information of a resource allocation requester;
processing the resource allocation chart and generating an access entrance of the resource allocation chart;
opening the access entrance to enable a third party resource supplier to respond to the resource allocation request via the access entrance;
determining a processing state of the resource allocation chart when the third party resource supplier passes through the access entrance;
providing a mode for responding to the resource allocation request according to the processing state of the resource allocation chart, so that the third party resource supplier responds to the resource allocation request according to the mode, the method being **characterised in that** it further comprises :
inquiring a first resource allocation record of the resource allocation requester that sends the resource allocation request;
inquiring a second resource allocation record of the third party resource supplier which responds to the resource allocation request;
mapping words in the first resource allocation record and the second resource allocation record into space vectors of a multidimensional vector space, whereby processing of text content in the first and second resource allocation records can be performed as operations in the multidimensional vector space;
characterizing similarity between the resource allocation requester and the third party resource supplier by calculating cosine similarity between the space vectors corresponding to words of the resource allocation requester and the third party resource supplier; and
when the cosine similarity is not less than a preset value, sending push information according to the first resource allocation record and the second resource allocation record, the push information being commodity information existing in one of the first resource allocation record and the second resource allocation record, and not existing in the other of the first allocation record and the second allocation record.

2. The method according to claim 1, wherein processing the resource allocation chart and generating the access entrance of the resource allocation chart comprise:
encoding a virtual address of the resource allocation chart and converting the encoded virtual address to generate a shared code.

3. The method according to claim 2, further comprising:
encrypting the resource allocation chart to generate an encrypted resource allocation chart.

4. The method according to claim 3, wherein generating the encrypted resource allocation chart comprises:
generating a chart number for the encrypted resource allocation chart.

5. The method according to any of claims 1 to 4, wherein opening the access entrance further comprises:
granting a permission for the third party resource supplier to access to the access entrance;
and
blocking a permission for the third party resource supplier to open the access entrance.

6. The method according to any of claims 1 to 4, wherein opening the access entrance comprises:
setting an access condition; and
when the access condition is satisfied, opening the access entrance.

7. The method according to claim 6, wherein setting the access condition comprises:
determining a maximum number of times that the third party resource supplier is allowed to access the access entrance; and
setting the access condition as a number of accesses being not exceeding the determined maximum number of times.

8. The method according to claim 6, wherein setting the access condition comprises:
determining an opening period of the access entrance; and
setting the access condition as an access time being within the determined opening period.

9. The method according to any one of claims 1 to 8, further comprising:
inquiring a second resource allocation record of the third party resource supplier which responds to the resource allocation request;
inquiring a third resource allocation record of another third party resource supplier which responds to the resource allocation request;
mapping words in the second resource allocation record and the third resource allocation record into space vectors of a multidimensional vector space, whereby processing of text content in the first and second resource allocation records can be performed as operations in the multidimensional vector space;
calculating cosine similarity between the space vectors corresponding to words of the third party resource supplier and the another third party resource supplier; and
when the cosine similarity is not less than a preset value, sending push information according to the second resource allocation record and the third resource allocation record.

10. The method according to any one of claims 1-9, wherein the resource allocation chart is a bill.

11. A resource processing apparatus configured to carry out the method of any one of claims 1 to 10.

12. A computer program product comprising program instructions operative to be executed by a processor to cause the processor to perform a method according to any of claims 1 to 10.

## Patentansprüche

1. Computerausführbares Verfahren zur Ressourcenverarbeitung, das Folgendes umfasst:
Erzeugen eines Ressourcenzuweisungsdiagramms basierend auf einer Ressourcenzuweisungsanforderung, wobei das Ressourcenzuweisungsdiagramm Informationen, die einen Fortschritt der Ressourcenbeschaffung für die Ressourcenzuweisungsanforderung aufzeichnen, und Informationen eines Ressourcenzuweisungsanforderers umfasst;
Verarbeiten des Ressourcenzuweisungsdiagramms und Erzeugen eines Zugriffszugangs des Ressourcenzuweisungsdiagramms;
Öffnen des Zugriffszugangs, um es einem Drittanbieter von Ressourcen zu ermöglichen, über den Zugriffszugang auf die Ressourcenzuweisungsanforderung zu antworten;
Bestimmen eines Verarbeitungszustands des Ressourcenzuweisungsdiagramms, wenn der Drittanbieter von Ressourcen den Zugriffszugang passiert;
Bereitstellen eines Modus zum Antworten auf die Ressourcenzuweisungsanfrage entsprechend dem Verarbeitungszustands des Ressourcenzuweisungsdiagramms, sodass der Drittanbieter von Ressourcen entsprechend dem Modus auf die Ressourcenzuweisungsanforderung antwortet, wobei das Verfahren **dadurch gekennzeichnet ist, dass** es weiter Folgendes umfasst:
Abfragen eines ersten Ressourcenzuweisungsdatensatzes des Ressourcenzuweisungsanforderers, der die Ressourcenzuweisungsanforderung sendet;
Abfragen eines zweiten Ressourcenzuweisungsdatensatzes des Drittanbieters von Ressourcen, der auf die Ressourcenzuweisungsanforderung antwortet;
Abbilden von Wörtern im ersten Ressourcenzuweisungsdatensatz und im zweiten Ressourcenzuweisungsdatensatz in Raumvektoren eines mehrdimensionalen Vektorraums, wodurch die Verarbeitung von Textinhalt im ersten und zweiten Ressourcenzuweisungsdatensatz als Operationen im mehrdimensionalen Vektorraum durchgeführt werden kann;
Charakterisieren der Ähnlichkeit zwischen dem Ressourcenzuweisungsanforderer und dem Drittanbieter von Ressourcen durch Berechnen der Kosinusähnlichkeit zwischen den Raumvektoren, die den Wörtern des Ressourcenzuweisungsanforderers und des Drittanbieters von Ressourcen entsprechen; und
wenn die Kosinusähnlichkeit nicht kleiner als ein voreingestellter Wert ist, Senden von Push-Informationen gemäß dem ersten Ressourcenzuweisungsdatensatz und dem zweiten Ressourcenzuweisungsdatensatz, wobei die Push-Informationen Wareninformationen sind, die in einem von dem ersten Ressourcenzuweisungsdatensatz und dem zweiten Ressourcenzuweisungsdatensatz vorhanden sind und in dem anderen von dem ersten Zuweisungsdatensatz und dem zweiten Zuweisungsdatensatz nicht vorhanden sind.

2. Verfahren nach Anspruch 1, wobei Verarbeiten des Ressourcenzuweisungsdiagramms und Erzeugen des Zugriffszugangs des Ressourcenzuweisungsdiagramms Folgendes umfasst:
Kodieren einer virtuellen Adresse des Ressourcenzuweisungsdiagramms und Umwandeln der kodierten virtuellen Adresse, um einen gemeinsam genutzten Code zu erzeugen.

3. Verfahren nach Anspruch 2, das weiter Folgendes umfasst:
Verschlüsseln des Ressourcenzuweisungsdiagramms, um ein verschlüsseltes Ressourcenzuweisungsdiagramm zu erzeugen.

4. Verfahren nach Anspruch 3, wobei Erzeugen des verschlüsselten Ressourcenzuweisungsdiagramms Folgendes umfasst:
Erzeugen einer Diagrammnummer für das verschlüsselte Ressourcenzuweisungsdiagramm.

5. Verfahren nach einem der Ansprüche 1 bis 4, wobei Öffnen des Zugriffszugangs weiter Folgendes umfasst:
Erteilen einer Berechtigung für den Drittanbieter von Ressourcen, auf den Zugriffszugang zuzugreifen; und
Blockieren einer Berechtigung für den Drittanbieter von Ressourcen, den Zugriffszugang zu öffnen.

6. Verfahren nach einem der Ansprüche 1 bis 4, wobei Öffnen des Zugriffszugangs Folgendes umfasst:
Festsetzen einer Zugriffsbedingung; und
wenn die Zugriffsbedingung erfüllt ist, Öffnen des Zugriffszugangs.

7. Verfahren nach Anspruch 6, wobei Festsetzen der Zugriffsbedingung Folgendes umfasst:
Festlegen einer maximalen Anzahl von Malen, bei der dem Drittanbieter von Ressourcen erlaubt ist, auf den Zugriffszugang zuzugreifen; und
Festsetzen der Zugriffsbedingung als eine Anzahl von Zugriffen, welche die festgelegte maximale Anzahl von Malen nicht überschreitet.

8. Verfahren nach Anspruch 6, wobei Festsetzen der Zugriffsbedingung Folgendes umfasst:
Festlegen eines Öffnungszeitraums des Zugriffszugangs; und
Festsetzen der Zugangsbedingung als eine Zugangszeit, die innerhalb des festgelegten Öffnungszeitraums liegt.

9. Verfahren nach einem der Ansprüche 1 bis 8, das weiter Folgendes umfasst:
Abfragen eines zweiten Ressourcenzuweisungsdatensatzes des Drittanbieters von Ressourcen, der auf die Ressourcenzuweisungsanforderung antwortet;
Abfragen eines dritten Ressourcenzuweisungsdatensatzes eines anderen Drittanbieters von Ressourcen, der auf die Ressourcenzuweisungsanfrage antwortet;
Abbilden von Wörtern im zweiten Ressourcenzuweisungsdatensatz und im dritten Ressourcenzuweisungsdatensatz in Raumvektoren eines mehrdimensionalen Vektorraums, wodurch die Verarbeitung von Textinhalt im ersten und zweiten Ressourcenzuweisungsdatensatz als Operationen im mehrdimensionalen Vektorraum durchgeführt werden kann;
Berechnen der Kosinusähnlichkeit zwischen den Raumvektoren, die den Wörtern des Drittanbieters von Ressourcen und des anderen Drittanbieters von Ressourcen entsprechen; und
wenn die Kosinusähnlichkeit nicht kleiner als ein voreingestellter Wert ist, Senden von Push-Informationen gemäß dem zweiten Ressourcenzuweisungsdatensatz und dem dritten Ressourcenzuweisungsdatensatz.

10. Verfahren nach einem der Ansprüche 1-9, wobei das Ressourcenzuweisungsdiagramm eine Rechnung ist.

11. Ressourcenverarbeitungseinrichtung, die zum Ausführen des Verfahrens nach einem der Ansprüche 1 bis 10 konfiguriert ist.

12. Computerprogrammprodukt, das Computeranweisungen umfasst, die betreibbar sind, um von einem Prozessor ausgeführt zu werden, um ein Verfahren nach einem der Ansprüche 1 bis 10 durchzuführen.

## Revendications

1. Procédé de traitement de ressources exécutable par ordinateur, comprenant :
la génération d'un graphique d'allocation de ressources sur la base d'une demande d'allocation de ressources, le graphique d'allocation de ressources comprenant des informations enregistrant une progression d'acquisition de ressources pour la demande d'allocation de ressources et des informations d'un demandeur d'allocation de ressources ;
le traitement du graphique d'allocation de ressources et la génération d'une entrée d'accès au graphique d'allocation de ressources ;
l'ouverture de l'entrée d'accès pour permettre à un fournisseur de ressources tiers de répondre à la demande d'allocation de ressources par l'intermédiaire de l'entrée d'accès ;
la détermination d'un état de traitement du graphique d'allocation de ressources lorsque le fournisseur de ressources tiers passe à travers l'entrée d'accès ;
la fourniture d'un mode de réponse à la demande d'allocation de ressources selon l'état de traitement du graphique d'allocation de ressources, de sorte que le fournisseur de ressources tiers répond à la demande d'allocation de ressources selon le mode, le procédé étant **caractérisé en ce qu'**il comprend en outre :
l'interrogation d'un premier enregistrement d'allocation de ressources du demandeur d'allocation de ressources qui envoie la demande d'allocation de ressources ;
l'interrogation d'un deuxième enregistrement d'allocation de ressources du fournisseur de ressources tiers qui répond à la demande d'allocation de ressources ;
la cartographie des mots dans le premier enregistrement d'allocation de ressources et le deuxième enregistrement d'allocation de ressources dans des vecteurs d'espace d'un espace vectoriel multidimensionnel, moyennant quoi le traitement du contenu textuel dans les premier et deuxième enregistrements d'allocation de ressources peut être effectué en tant qu'opérations dans l'espace vectoriel multidimensionnel ;
caractériser la similarité entre le demandeur d'allocation de ressources et le fournisseur de ressources tiers en calculant une similarité cosinus entre les vecteurs d'espace correspondant à des mots du demandeur d'allocation de ressources et du fournisseur de ressources tiers ; et
lorsque la similarité cosinus n'est pas inférieure à une valeur prédéfinie, envoyer des informations push selon le premier enregistrement d'allocation de ressources et le deuxième enregistrement d'allocation de ressources, les informations push étant des informations de commodité existant dans un parmi le premier enregistrement d'allocation de ressources et le deuxième enregistrement d'allocation de ressources, et n'existant pas dans l'autre parmi le premier enregistrement d'allocation et le deuxième enregistrement d'allocation.

2. Procédé selon la revendication 1, dans lequel le traitement du graphique d'allocation de ressources et la génération de l'entrée d'accès du graphique d'allocation de ressources comprennent :
l'encodage d'une adresse virtuelle du graphique d'allocation de ressources et la conversion de l'adresse virtuelle encodée pour générer un code partagé.

3. Procédé selon la revendication 2, comprenant en outre :
le chiffrage du graphique d'allocation de ressources pour générer un graphique d'allocation de ressources chiffré.

4. Procédé selon la revendication 3, dans lequel la génération du graphique d'allocation de ressources chiffré comprend :
la génération d'un numéro de graphique pour le graphique d'allocation de ressources chiffré.

5. Procédé selon l'une quelconque des revendications 1 à 4, dans lequel l'ouverture de l'entrée d'accès comprend en outre :
l'accord d'une autorisation pour le fournisseur de ressources tiers pour accéder à l'entrée d'accès ; et
le blocage d'une autorisation pour le fournisseur de ressources tiers pour ouvrir l'entrée d'accès.

6. Procédé selon l'une quelconque des revendications 1 à 4, dans lequel l'ouverture de l'entrée d'accès comprend :
la définition d'une condition d'accès ; et
lorsque la condition d'accès est satisfaite, l'ouverture de l'entrée d'accès.

7. Procédé selon la revendication 6, dans lequel la définition de la condition d'accès comprend :
la détermination d'un nombre maximal de fois que le fournisseur de ressources tiers est autorisé à accéder à l'entrée d'accès ; et
la définition de la condition d'accès comme un nombre d'accès ne dépassant pas le nombre maximal de fois déterminé.

8. Procédé selon la revendication 6, dans lequel la définition de la condition d'accès comprend :
la détermination d'une période d'ouverture de l'entrée d'accès ; et
la définition de la condition d'accès comme un temps d'accès étant au sein de la période d'ouverture déterminée.

9. Procédé selon l'une quelconque des revendications 1 à 8, comprenant en outre :
l'interrogation d'un deuxième enregistrement d'allocation de ressources du fournisseur de ressources tiers qui répond à la demande d'allocation de ressources ;
l'interrogation d'un troisième enregistrement d'allocation de ressources d'un autre fournisseur de ressources tiers qui répond à la demande d'allocation de ressources ;
la cartographie des mots dans le deuxième enregistrement d'allocation de ressources et le troisième enregistrement d'allocation de ressources dans des vecteurs d'espace d'un espace vectoriel multidimensionnel, moyennant quoi le traitement du contenu textuel dans les premier et deuxième enregistrements d'allocation de ressources peut être effectué en tant qu'opérations dans l'espace vectoriel multidimensionnel ;
le calcul de la similarité cosinus entre les vecteurs d'espace correspondant à des mots du fournisseur de ressources tiers et de l'autre fournisseur de ressources tiers ; et
lorsque la similarité cosinus n'est pas inférieure à une valeur prédéfinie, l'envoi des informations push selon le deuxième enregistrement d'allocation de ressources et le troisième enregistrement d'allocation de ressources.

10. Procédé selon l'une quelconque des revendications 1-9, dans lequel le graphique d'allocation de ressources est une facture.

11. Appareil de traitement de ressources configuré pour mettre en œuvre le procédé selon l'une quelconque des revendications 1 à 10.

12. Produit de programme informatique comprenant des instructions de programme opérant pour être exécutées par un processeur pour amener le processeur à mettre en œuvre le procédé selon l'une quelconque des revendications 1 à 10.
